# EUROPÄISCHE PATENTSCHRIFT

(11) **EP 1 006 638 B1**
(45) Veröffentlichungstag und Bekanntmachung des Hinweises auf die Patenterteilung: **30.10.2002**
(21) Anmeldenummer: 99123623.3
(22) Anmeldetag: 27.11.1999
(51) Int. Cl.: H02G 9/06, H02G 1/08

(54) **Verfahren zur unterirdischen Verlegung von Kabeln und Versorgungsleitungen**
Method for laying cables and distribution lines in the ground
Méthode pour la pose souterraine de cables et de lignes d'alimentation

(30) Priorität: 02.12.1998 DE 19855648
(43) Veröffentlichungstag der Anmeldung: 07.06.2000
(73) Patentinhaber: Preuss, Gerald, 45768 Marl (DE)
(72) Erfinder: Preuss, Claudia, 45768 Marl (DE)
(74) Vertreter: Schulte, Jörg, Dipl.-Ing.

(56) Entgegenhaltungen:
- EP-A- 0 942 504
- DE-A- 19 701 787
- DE-U- 29 816 103
- GB-A- 2 226 615

## Beschreibung

Die Erfindung betrifft ein Verfahren zur Verlegung von Kabeln im Erdreich unter Ausnutzung vorhandener Abwasserrohre und Kanäle, wobei das Kabel im Rohr im vorgegebenen Abstand über ein Anpressmittel befestigt und dann an den Versorger und den Abnehmer angeschlossen wird. Die Erfindung betrifft außerdem ein Verfahren zur Verlegung von Versorgungsleitungen im Erdreich, die abschnittsweise zusammengefügt im Erdreich verlegt über ein Anpressmittel im Kanal festgelegt und dann an den Versorger und den Abnehmer angeschlossen werden. Darüber hinaus betrifft die Erfindung eine Einrichtung zur Verlegung von Kabeln und/oder von Versorgungsleitungen im Erdreich unter Ausnutzung vorhandener Abwasserrohre und Kanäle mit einer von den Schächten oder Berührungspunkten aus einzuführenden und im Abwasserrohr verschiebbaren und fernbedienbaren Kabelfixiervorrichtung, und damit zur Durchführung des Verfahrens in Anspruch 1 oder Anspruch 2 und den nachfolgenden Ansprüchen.

Die klassische Verlegung von Kabeln und auch von Versorgungsleitungen im Erdreich erfolgt durch Herstellung eines entsprechenden Grabens, in den das Kabel bzw. die Versorgungsleitung im entsprechenden Abstand zur Oberfläche hineingelegt wird. Bekannt ist es dabei, beispielsweise die Kabel in entsprechenden Schutzrohren zu verlegen, oder aber sie mit einem entsprechend ausgleichenden Material, wie beispielsweise Sand, zu umhüllen. Bezüglich der Wasser-, Gas- und auch sonstigen Versorgungsleitungen muss dabei darauf geachtet werden, dass die entsprechenden Versorgungsleitungen so tief im Erdreich verlegt werden, dass sie durch Frost oder ähnliche Beeinflussungen nicht gefährdet sind. Um diesen sehr erheblichen Aufwand zu reduzieren, ist man nun dazu übergegangen, das vorhandene Abwassernetz soweit möglich mit auszunutzen. Mit Hilfe eines im jeweiligen Abwasserrohr bzw. Kanal verfahrbaren Roboters wird ein entsprechend flexibles Kabel an der Innenwand des Abwasserrohres festgelegt, wozu herkömmliche Kabelhalter dienen. Abgesehen von dem damit verbundenen Aufwand durch Fernsehkameras und Fixiereinrichtungen ist von Nachteil, dass aufgrund der zum Einsatz kommenden Roboter nur in die einen entsprechend großen Durchmesser aufweisenden Rohrleitungen bzw. Kanäle eingeführt werden können. Bei Durchmessern von unter 500 mm sind solche Kanalroboter in aller Regel nicht mehr einsetzbar (DE-OS 197 01 787). Offenbar mit einem Kanalroboter können auch Spezialschläuche positioniert werden, die aufgeblasen werden, die dann aushärten müssen und die das Flachbandkabel dann fixieren sollen. Ein solches Verfahren ist aufwendig und auf unbedeutende Einsatzgebiete eingeschränkt. Die GB 2 226 615 A sieht eine ringförmigen Behälter vor, der in ein Rohr eingezogen und dann dort festgesetzt wird. Eine solche Lösung ist unflexibel und sieht keine Merkmale zum Fixieren von Kabeln oder Röhren vor. Aus der DE-U-298 16 103 ist eine Rohrsanierung bekannt, bei der zwischen Rohrinnenwand und neuer Rohrinnenbeschichtung ein Halter für Kabel und Ähnliches angeordnet ist. Das Verfahren ist ein Sanierungsverfahren und das Schutzrecht lehrt bezüglich des Halters nur sehr spezifische Ausbildungen.

Der Erfindung liegt daher die Aufgabe zugrunde, ein Verfahren und eine Einrichtung zu schaffen, mit der sowohl Kabel wie auch Versorgungsleitungen ohne aufwendige Erdarbeiten und vor allem kostengünstig in vorhandenen Kanälen verlegt werden können.

Die Aufgabe wird gemäß der Erfindung dadurch gelöst, dass das Kabel in den Abschnitt zwischen zwei Schächten oder Begehungspunkten eingeführt und auf Spannung gebracht und gehalten wird, dass ein dem Rohrquerschnitt angepasst ausgebildeter Packer mit Hilfe eines Zugseils in das Rohr eingeschoben und im vorgegebenen Abstand aufgebläht wird, über den ein Kabelhalter in Form eines mit Zweikomponentenkleber getränkten Klebestreifens an der Kanalinnenwand festgesetzt wird, der rund um den Packer gelegt und über diesen auch rundum an die Innenwand angepresst und unter Einfassung des Kabels an der Innenwand des Rohres angeklebt wird, und dass mit Hilfe des Packers gleichzeitig bei Bedarf eine Rohrsanierung durch Mitverkleben undichter Stellen durchgeführt wird.

Bei einem derartigen Verfahren können zunächst einmal zwei Arbeiten kombiniert durchgeführt werden, in dem einerseits über die Fernsehanlage die Innenwand des Abwasserrohres bzw. -kanals überprüft und mit Hilfe des Packers dann Rohrsanierungen durchgeführt werden, wobei gleichzeitig mit der Rohrsanierung auch das mit eingezogene Kabel festgelegt wird. Über den gleichen Packer können dann auch an den intakten Bereichen der Rohrwandung die Fixierungen vorgenommen werden, so dass das Kabel mit der notwendigen Sicherheit im Bereich der Firste so festgelegt ist, dass es auch bei Hochwasser oder Überflutung des Abwasserrohres für das Wasser kein Hindernis darstellt. Bevorzugt ist dabei das Einkleben des Kabels zusammen mit der Rohrsanierung, wobei diese Fixierung durch das Aufblähen des Packers möglich wird, der dabei das entsprechende Klebematerial gegen die Innenwand des Abwasserrohres anpresst und dafür sorgt, dass sich dieses dort so festsetzt, dass auch das Kabel gleichzeitig mit gehalten wird. Vorteilhaft bei diesem Verfahren ist dabei insbesondere, dass alle im öffentlichen Bereich eingesetzten Rohrleitungen, d. h. bis runter zu 150 mm, mit für die Verlegung der Kabel eingesetzt werden können, wobei man letztlich sogar bis auf DN 50 heruntergehen kann, so dass mit Hilfe des erfindungsgemäßen Verfahrens die Kabel sogar durch das Abwassernetz hindurch bis in den Bereich der Wohnungen gebracht werden können, zumindestens aber bis in den Bereich der Häuser. Besonders vorteilhaft aber ist, dass hier die Sanierung und die Verlegung der Kabel parallel laufen, so dass die Kommunen über die Gelder aus der Verlegung der Kabel, d. h. über die Mieten, gleichzeitig auch die Sanierungen mit durchführen können. Die öffentlichen Haushalte werden somit erheblich entlastet. Der Klebestreifen wird rund um den Packer gelegt und über diesen auch rundum an die Innenwand angepaßt. Es erfolgt somit nicht ein gezieltes Ankleben an den Firstbereich des Abwasserrohres bzw. des Abwasserkanals, sondern es erfolgt vielmehr eine Rundumverklebung, so dass damit auch eine stabilere Befestigungsmöglichkeit geschaffen wird. Dies hat darüber hinaus auch den Vorteil, dass auch dann, wenn der Packer sich in irgendeiner Weise gedreht oder verschoben haben sollte, dennoch immer die Festlegung des Kabels oder der Verbindungsleitung mit der notwendigen Sicherheiten vollzogen wird, weil der Klebestreifen eben rundum verläuft und sich dann auch an die Innenwand anlegt.

Weiter vorn ist ein Verfahren beschrieben, mit dem Kabel, d. h. also mehr oder weniger flexible Leitungen im Wassernetz verlegt werden, um so die notwendigen Erdarbeiten zu vermeiden bzw. die Verlegearbeiten im Rohrleitungsnetz so zu vereinfachen, dass damit nicht nur Geld gespart wird, sondern vielmehr damit gleichzeitig auch weitere Arbeiten durchgeführt werden. Um das Verfahren auch für Versorgungsleitungen einsetzen zu können, sieht die Erfindung vor, dass die Versorgungsleitung in Form eines Metall- oder Kunststoffrohres vorab zusammengefügt in den Abschnitt zwischen zwei Schächten oder Begehungspunkten eines im Erdreich verlegten Abwasserkanals oder einer Abwasserrohrleitung eingeführt und über Vorspannung im Bereich des oberen Scheitelpunktes des Rohrquerschnittes gehalten wird, dass ein dem Rohrquerschnitt angepasst ausgebildeter Packer mit Hilfe eines Zugseils in die Rohrleitung (Kanal) eingeschoben und im vorgegebenen Abstand aufgebläht wird, über den ein Leitungshalter in Form eines mit Zweikomponentenkleber getränkten Klebestreifens an der Rohrleitungsinnenwand festgesetzt wird, der rund um den Packer gelegt und über diesen auch rundum an die Innenwand angepresst und unter Einfassung des Kabels an der Innenwand des Rohres angeklebt wird, und dass bei Bedarf gleichzeitig mit Hilfe des Packers eine Rohrleitungssanierung durch Mitverkleben undichter Stellen durchgeführt wird.

Überraschend ist es mit Hilfe dieses Verfahrens somit möglich, auch die unflexiblen Rohrleitungen aus Metall oder Kunststoff dort zu verlegen, wo u. U. vor 100 Jahren ein Abwassersystem geschaffen worden ist. Aufgrund der gegebenen Verhältnisse können somit erhebliche Erdarbeiten vermieden und dabei gleichzeitig sichergestellt werden, dass die entsprechenden Versorgungsleitungen auch genau dort und unter günstigen klimatischen Verhältnissen verlegt werden, wo eine Verlegung verhältnismäßig einfach und auch eine Überwachung möglich ist. Im Bereich des Scheitelpunktes derartiger Abwasserkanäle bzw. Rohrleitungen behindern diese Versorgungsleitungen den Abfluss des Wassers nicht und selbst bei einer Beschädigung der Versorgungsleitung treten Probleme in dem Sinne nicht auf, weil das in den Versorgungsleitungen mitgeführte Reinwasser dann einfach mit dem Abwasser abfließt bzw. das Gas über die Rohrleitungen so weiter geleitet wird, dass es zu Problemen nicht kommen kann bzw. dass man den aufgetretenen Schaden schnell feststellt und dann auch behebt, wobei von Vorteil ist, dass die entsprechenden Kanäle durch eine Einrichtung befahren werden können, die auch in DN 150 oder darunter liegende Rohrdurchmesser eingeführt werden kann, um die notwendigen Verlegungs- und auch Reparaturarbeiten durchzuführen. Dabei zeigt es sich, dass die Versorgungsleitungen ja schon aufgrund ihrer Ausbildung vorab schon so vormontiert bzw. so vorverlegt sind, dass sie durch den Packer mit den entsprechenden Leitungshaltern gut zu erreichen und auch gut im Bereich des Scheitelpunktes festzulegen sind. Der Packer läßt während der Arbeiten das Abwasser passieren, da er, wie üblich, innen hohl ist. Der Klebestreifen wird rund um den Packer gelegt und über diesen auch rundum an die Innenwand angepaßt. Es erfolgt somit nicht ein gezieltes Ankleben an den Firstbereich des Abwasserrohres bzw. des Abwasserkanals, sondern es erfolgt vielmehr eine Rundumverklebung, so dass damit auch eine stabilere Befestigungsmöglichkeit geschaffen wird. Dies hat darüber hinaus auch den Vorteil, dass auch dann, wenn der Packer sich in irgendeiner Weise gedreht oder verschoben haben sollte, dennoch immer die Festlegung des Kabels oder der Verbindungsleitung mit der notwendigen Sicherheiten vollzogen wird, weil der Klebestreifen eben rundum verläuft und sich dann auch an die Innenwand anlegt.

Eine zweckmäßige Weiterbildung des Verfahrens sieht vor, dass das Kabel oder die Versorgungsleitung jeweils im oberen Scheitelpunkt des Rohres oder Kanals angeheftet wird, wodurch sichergestellt ist, dass sowohl das Kabel oder die Versorgungsleitung, wie aber auch der Kabelhalter bzw. der Leitungshalter kein Hindernis für das abströmende Wasser darstellt, zumindest aber nicht für den normalen Betrieb. Kommt es zu Extremsituationen, so ist es letztlich nicht problematisch, wenn im Scheitelpunkt einige vom Abwasser mitgeführte Partikel hängenbleiben, da sie in aller Regel später dann wieder mitgerissen werden, wenn es wieder einmal zu entsprechend hohen Belastungen des Rohrleitungsnetzes kommt.

Bei der Verarbeitung der Klebestreifen zum Festlegen der Kabel bzw. der Versorgsleitungen, muss der Packer für jeden Befestigungs- bzw. Sanierungspunkt durch den Kanal bzw. das Rohr zum Ausgangspunkt zurückgezogen und dort mit einem Klebestreifen bestückt werden. Um gleichzeitig mit einem Verfahren des Packers mehrere Befestigungspunkte bedienen zu können, sieht die Erfindung vor, dass der Packer mit mehreren im Abstand angeordneten Klebestreifen versehen wird und dass dann durch segmentweises Aufblähen einer Kammer und nach Verschieben des Packers auch der anderen an der Innenwand festgeklebt werden. Der Klebestreifen, der mit einem Zweikomponentenmaterial getränkt ist, kann auch nach entsprechend großen Zeitabständen noch verarbeitet werden, wenn der Zweikomponentenkleber mit einem entsprechenden Verzögerer gemischt ist. Dementsprechend werden bei zwei, drei oder mehr Klebestreifen eben unterschiedliche Verzögerer eingesetzt, so dass nach dem Festlegen eines der Klebestreifen der nächste und dann der übernächste auch noch verarbeitet werden können, ohne dass es zu einem zu frühen Aushärten des Zweikomponentenklebers kommen kann.

Weiter vorne ist bereits darauf hingewiesen worden, dass aufgrund des erfindungsgemäßen Verfahrens und des Einsatzes entsprechender Packer die Möglichkeit gegeben ist, auch die Kabel noch durch Rohre zu verlegen, die einen Durchmesser von rund 150 bis 50 mm aufweisen. Bei entsprechender Ausbildung der Packer könnte theoretisch auch noch eine Verlegung der Kabel in dünneren Rohrleitungen erfolgen, wobei dies beispielsweise auch für Kunststoffrohre gilt, weil mit Hilfe des Zweikomponentenklebers eine Fixierung der Kabel bzw. der Versorgungsleitung problemlos möglich ist. Die Erfindung sieht dementsprechend auch vor, dass das Kabel vom Abwasserkanal ausgehend über eine Entsorgungsrohre bis in ein Haus und letztlich eine Wohnung geführt und dort beispielsweise mit einer Telefonzentrale, einem Computer oder Fernseher o. Ä. verbunden wird. Damit erübrigt sich auch innerhalb des Hauses bzw. der Wohnung ein Aufstemmen der Wände, um das Kabel entsprechend zu verlegen oder auch um die Versorgungsleitung zu verlegen. Vielmehr wird durch die vorhandenen Abwasserrohre hindurch das Kabel bis in die Wohnung geführt, um hier die notwendige Verzweigung vorzunehmen. Insbesondere bei Büros und ähnlichen Bereichen ist es von Vorteil, wenn eine Nachrüstung beispielsweise ohne die bisher üblichen aufwendigen Arbeiten innerhalb des Büros möglich wird. Abwasserleitungen bzw. Abwasserrohre sind nun einmal überall verhanden, nur dass sie lediglich für das Abführen des Abwassers verwendet werden. Mit Hilfe des erfindungsgemäßen Verfahrens können nun bis in die einzelnen verzweigten Rohre hinein Kabel, insbesondere auch Glasfaserkabel, verlegt werden, über die dann eine Vielzahl von Informationen, Daten u. Ä. transportiert werden können.

Das Vermessen von Abwasserleitungen bzw. -rohren bzw. das Überprüfen wird gemäß der Erfindung dadurch wesentlich erleichtert, dass das Kabel oder die Versorgungsleitung im immer gleichen, metrischen, vorzugsweise 5000-mm-Abstand im Scheitelpunkt festgelegt wird. Beim späteren Durchführen einer Fernsehkamera oder auch beim Begehen von Rohrleitungen entsprechenden Durchmessers kann dann sehr leicht festgestellt werden, wo eventuell später Beschädigungen aufgetreten sind, weil die Kabelhalter bzw. die Leitungshalter immer im gleichen Abstand verlegt bzw. angeordnet sind. Ohne ein Maßband einzusetzen, kann dann genau der jeweilige Punkt festgelegt werden, wo eventuelle Nacharbeiten notwendig sind.

Zur Durchführung des Verfahrens dient eine Einrichtung, bei der die Kabelfixiervorrichtung ein dem Abwasserrohr angepaßt ausgebildeter Packer ist, der mit einem als ein mit Zweikomponentenklebern getränkter Klebestreifen, dessen Länge dem Innenumfang des Abwasserrohres entsprechend bemessen ist ausgebildeter Kabelhalter zu bestücken und im Abwasserrohr hin und her zu verschieben und aufblähbar und gegen die Innenwand des Abwasserrohres zu verspannen ist und dass getrennt davon für das Kabel oder die Versorgungsleitung eine Einführ- und Spannvorrichtung vorgesehen ist. Mit Hilfe einer derartigen Einrichtung kann das erfindungsgemäße Verfahren optimal durchgeführt werden. Das Kabel wird über die Einführ- und Spannvorrichtung ebenso wie die Versorgungsleitung in den bereits bestehenden Kanal bzw. das Abwasserrohr abschnittsweise eingeführt und dann über den entsprechend ausgebildeten Packer erfaßt und genau dort fixiert, wo eine solche Fixierung für das Abwasser keine Behinderung oder so gut wie keine Behinderung darstellt. Hierzu wird der Packer entsprechend aufgebläht und gegen die Innenwand des Abwasserrohres verspannt, um damit gleichzeitig das Kabel festzulegen und gegebenenfalls auch eine Sanierung vorzunehmen, indem die entsprechenden Schadstellen verklebt und damit abgedichtet werden. Dabei muss man berücksichtigen, dass dieses Verkleben von Schadstellen nicht nur verhindert, dass Wasser von außen her in die Abwasserleitung bzw. den Abwasserkanal eindringt, sondem insbesondere auch Abwasser in den Untergrund absickert, weil ja dieses Absickern von Schmutzwasser eine starke Beeinträchtigung der Umwelt darstellen würde. Auch hier ist wieder festzuhalten, dass die Erfindung auch von der Vorrichtung her eine Doppelfunktion erfüllt und erfüllen kann, was für den Betreiber, insbesondere aber für den Inhaber des Abwasserrohres bzw. des Abwasserkanals einen erheblichen Vorteil mit sich bringt. Er kann mehrere Arbeiten kombinieren und er kann sich beispielsweise als Kommune die Abdichtung des Abwasserrohres durch das Verlegen des Kabels bezahlen lassen. Der Kabelhalter bzw. Klebestreifen wird um den Packer herumgelegt und so gefaltet, dass beim Aufblähen des Packers, egals mit allen Kammern gleichzeitig oder nur mit einer einzelnen Kammer, gleichzeitig damit der Klebestreifen sich auseinanderfaltet und an die Innenwand des Kanals bzw. des Rohres anlegt. Der Packer bleibt dann so lange im augeblähten Zustand in dieser Position, bis der Zweikomponentenkleber ausgehärtet ist, so dass nach dem Entlasten der Kammer dann der Packer in seine nächste Position gezogen wird, um hier wiederum den nächsten Klebestreifen zu aktivieren. So kann je nach Größe des Packers eine Mehrzahl von Klebestreifen bzw. Kabelhaltern verlegt werden, ohne dass es notwendig ist, den Packer an den Ausgangspunkt zurückzubringen und dort mit neuen Kabelhaltern zu bestücken.

Der als Kabelfixiervorrichtung und auch als Sanierer zum Einsatz kommende Packer wird durch das Abwasserrohr bzw. den Kanal von einem Punkt zum anderen gezogen und muss dabei gleichzeitig sich auch an verschiedenen Stellen so verspannen, dass damit die Schadstellen behoben und das Kabel bzw. die Versorgungsleitung an der Innenwand fixiert wird. Dies erreicht man insbesondere und zweckmäßig dadurch, dass der Packer beidseitig mit einem Zugseil verbunden ist, von denen eines, vorzugsweise beide mit einer Druckluftleitung kombiniert sind. Hierdurch kann das Verspannen sehr kurzzeitig und auch unabhängig davon erfolgen, wenn auch wirklich jede der beiden Druckluftleitungen aktiviert ist. Besonders vorteilhaft dabei ist, dass die jeweiligen Druckluftleitungen durch die Kombination mit dem Zugseil selbst nicht belastet oder gar überlastet werden, so dass die notwendige Druckluft auch immer wirklich und kurzfristig zum Aufblähen des Packers zur Verfügung steht.

Zweckmäßig ist es, wie weiter vorne beschrieben, gleichzeitig mehrere Fixierungen des Kabels oder der Versorgungsleitung vorzunehmen, ohne den Packer jeweils in die Ausgangsposition zurückziehen zu müssen. Dies erreicht man insbesondere dadurch, dass der Packer mehrere, nacheinander oder gleichzeitig mit der Druckluftleitung verbindbare Kammern aufweist. Werden alle Kammern gleichzeitig mit Druckluft versorgt, so wird der gesamte Packer aufgebläht und es ist damit möglich, beispielsweise einen entsprechend großen Schadensbereich gleichzeitig zu bearbeiten bzw. zu heilen. Sollen aber nur die Kabelhalter bzw. Leitungshalter eingebracht werden, so werden einzelne der Kammern nacheinander angesprochen und mit Druckluft aufgebläht, so dass jeweils auch die einzelnen Halter an die Innenwand des Kanals bzw. des Rohres angepresst werden, um die Versorgungsleitung oder das Kabel entsprechend zu fixieren. Dies erfolgt insbesondere auch dadurch, dass jeder der Kammern mit einem Kabelhalter auszurüsten ist.

Bei Einsatz entsprechender Packer ist ein Kabelhalter zweckmäßigerweise, als als ein mit Zweikomponentenklebern getränkter Klebestreifen ausgebildet, dessen Länge dem Innenumfang des Abwasserrohres entsprechend bemessen ist. Dieser Kabelhalter bzw. Klebestreifen wird um den Packer herumgelegt und so gefaltet, dass beim Aufblähen des Packers, egals mit allen Kammern gleichzeitig oder nur mit einer einzelnen Kammer, gleichzeitig damit der Klebestreifen sich auseinanderfaltet und an die Innenwand des Kanals bzw. des Rohres anlegt. Der Packer bleibt dann so lange im augeblähten Zustand in dieser Position, bis der Zweikomponentenkleber ausgehärtet ist, so dass nach dem Entlasten der Kammer dann der Packer in seine nächste Position gezogen wird, um hier wiederum den nächsten Klebestreifen zu aktivieren. So kann je nach Größe des Packers eine Mehrzahl von Klebestreifen bzw. Kabelhaltern verlegt werden, ohne dass es notwendig ist, den Packer an den Ausgangspunkt zurückzubringen und dort mit neuen Kabelhaltern zu bestücken.

Weiter vorn ist bereits darauf hingewiesen worden, dass durch die Verwendung rund um den Packer verlegter Klebestreifen die Gefahr nicht besteht, dass mit dem Aufblähen des Packers nicht gleichzeitig auch das Kabel bzw. die Versorgungsleitung am Scheitelpunkt bzw. an der Innenwand des Kanals bzw. Rohres festgelegt wird. Dennoch ist es vorteilhaft, wenn der Packer gemäß Erfindung sich am bereits verlegten Kabel führend bzw. am Scheitelpunkt des Abwasserrohres orientierend ausgebildet ist. Dies erleichtert zunächst einmal die genaue Position vorzuhalten bzw. zu erreichen, um auch genau dort den jeweiligen Kabelhalter bzw. den Klebestreifen einzubringen, wo dies nach der weiter vorn offenbarten Lehre als zweckmäßig angesehen wird. Darüber hinaus kann aber auch auf weitere Führungseinrichtungen, wie beispielsweise vorlaufende und rücklaufende Rollen, verzichtet werden, weil der Packer sich eben am bereits verlegten Kabel selbst führen kann, wenn er vom Ausgangspunkt mit neuen Klebestreifen bzw. Kabelhaltern zurück an seinen neuen Arbeitspunkt verfahren bzw. gezogen wird.

Neben den beschriebenen Kurzliner-Verfahren ist auch die Fixierung der Kabel über als Kabelhalter zu bezeichnende Innenmanschetten aus Stahl oder aus PVC oder Elastomermanschetten mit teilflächiger Verspannung zu erreichen.

Die Erfindung zeichnet sich insbesondere dadurch aus, dass ein Verfahren und eine Vorrichtung geschaffen ist, mit der sowohl Kabel wie auch Versorgungsleitungen in Form von dünnwandigen und einen geringen Durchmesser aufweisenden Rohren so verlegt werden können, dass Erdarbeiten völlig überflüssig werden. Die Kabel bzw. die Versorgungsleitungen werden durch vorhandene Abwasserkanäle und Abwasserrohre verlegt, und zwar so, dass sie für das Abwasser keine Behinderung darstellen. Sie werden jeweils im oberen Scheitelpunkt festgelegt, und zwar so festgelegt, dass sie für das Abwasser keine Behinderung darstellen, schon weil sie durch die zum Einsatz kommenden Kabelhalter bzw. Leitungshalter an der Innenwand optimal festgelegt sind. Da Klebestreifen vor allem zum Einsatz kommen, die rund um den jeweiligen Packer gelegt sind, kann es auch nicht zu Problemen beim Fixieren bzw. Festlegen des Kabels bzw. der Leitung kommen, da der Packer sich beim Ausdehnen dicht an die Innenwand des Kanals bwz. des Rohres anpresst und dabei das Kabel bzw. die Leitung jeweils gegen die Innenwand drückt und dann mit Hilfe des Klebestreifens auch festlegt. Selbst wenn er sich verdreht hat, stellt dies keine Behinderung und kein Problem dar, weil er ja den Klebestreifen rundum trägt und diesen auch rundum an die Innenwand andrückt. Da der Klebestreifen nur einige Millimeter dick ist, stellt er für das fließende Abwasser keine Behinderung dar. Darüber hinaus besteht mit Hilfe des Klebestreifens auch die Möglichkeit, diesen jeweils den Rohrabschnitten entsprechend genau in den Stoß zwischen zwei benachbarten Rohren zu verlegen, um so diese Schnittstelle auch gleichzeitig noch abzudichten, wobei, wie weiter vorne deutlich gemacht, diese besondere Fixierung des Kabels bzw. der Leitung darüber hinaus auch den Vorteil mit sich bringt, dass damit gleichzeitig auch Undichtigkeiten beseitigt werden. Durch evtl. Überbelastungen, beispielsweise auch durch Gebirgsschläge aufgetretene Undichtigkeiten im Rohrleitungssystem, können nach dem Erkennen mit dem Verlegen der Rohrleitung auch gleichzeitig abgedichtet werden, ohne dass dafür zusätzliche Schritte erforderlich würden. Es müssen einfach nur mit dem Packer entsprechend bemessene Klebestreifen eingebracht und gegen die Rohrinnenwand gepresst werden, um so die Dichtigkeit des gesamten Rohrnetzes nach und nach wieder herzustellen. Besonders vorteilhaft aber ist, dass diese Rohrsanierungsarbeiten praktisch mit dem Verlegen des Kabels bzw. der Versorgungsleitung gleichzeitig vorgenommen werden, so dass die hierdurch entstehenden Kosten quasi vom Verleger des Kabels bzw. der Leitung mitgetragen werden, um so die Kommune entsprechend deutlich zu entlasten.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: einen Schnitt durch einen Abwasserkanal mit im Abstand angeordneten Schächten,
- Figur 2: eine vergrößerte Wiedergabe des nach dem Einsatz wieder weiter verschobenen Packers,
- Figur 3: einen Packer in Ausgangsposition mit einem zu fixierenden Kabel,
- Figur 4: den aufgeblähten Packer mit Klebestreifen,
- Figur 5: den gleichen Bereich wie in Figur 3 und Figur 4 nach erfolgter Sanierungs- und Fixierungsarbeit,
- Figur 6: einen Schnitte durch den aus Figur5 erkennbaren Sanierungs- und Fixierungsbereich,
- Figur 7: ein Glasfaserkabel im Schnitt,
- Figur 8: eine Versorgungsleitung für Wasser im Schnitt und
- Figur 9: eine Versorgungsleitung für Gas im Schnitt.

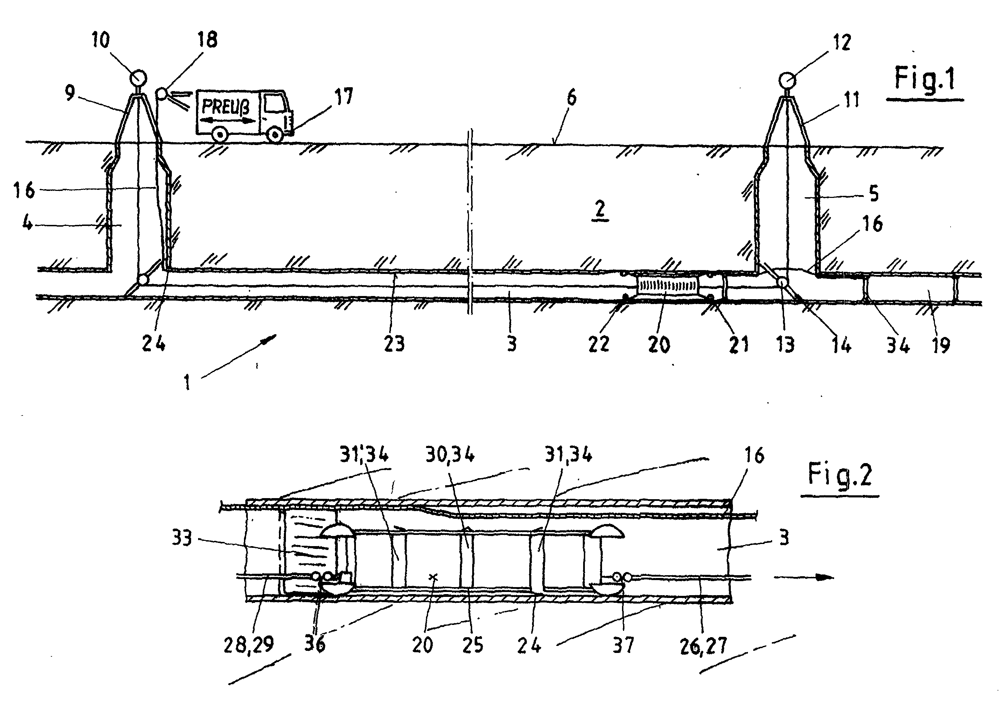

Figur 1 verdeutlicht eine Kabelverlegeeinrichtung 1, bei der auf das im Erdreich 2 verlegte Abwasserrohr 3 zurückgegriffen wird. Dieses Abwasserrohr 3 kann von der Erdoberfläche 6 bzw. von der Straßenoberfläche 6 aus erreicht werden, weil im Abstand Schächte 4, 5 vorgesehen sind.

Im Abwasserrohr 3 ist eine Kabelfixiervorrichtung 8 in Längsrichtung verschiebbar angeordnet. Diese Kabelfixiervorrichtung 8, hier ein entsprechender Packer 20, kann einmal vom Stützbaum 9 mit der Antriebsrolle 10 aus oder vom Stützbaum 11 mit der Antriebsrolle 12 aus verfahren werden. Hierzu ist jeweils am Fuße des Schachtes 4 bzw. 5 eine Umlenkrolle 13 mit an dem Stützgerüst 14 vorgesehen. Durch Einschalten der Antriebsrolle 10 bzw. der Antriebsrolle 12 wird der Packer 20 nach rechts oder nach links an eine Stelle gefahren, wo er das Kabel 16 entsprechend festlegen kann.

Das Kabel 16 wird von dem Versorgungsfahrzeug 17 aus zugeführt, wobei hier eine Spannvorrichtung 18 dafür sorgt, dass das im sanierten Bereich 19 festgelegte Kabel 16 immer auf Spannung gehalten wird, so dass es über den Packer 20 entsprechend auch an der Innenwand 23 des Abwasserrohres 3 im Abstand festgelegt wird

Bei der in Figur 1 gezeigten Ausführung ist der Packer 20 mit Führungsrollen 21, 22 bestückt. Diese Führungsrollen, 21, 22 sind aber nicht unbedingt nötig. Vielmehr kann nach Figur 2 auch einfach eine Art Gleithilfe zum Einsatz kommen, über die ein gleichmäßiges Ziehen und Verfahren des Packers 20 innerhalb des Abwasserrohres 3 möglich ist. Der Packer ist innen hohl, so dass auch bei fließendem Wasser gearbeitet werden kann.

Der in Figur 1 und Figur 2 gezeigte Packer 20 soll zu Sanierungsarbeiten eingesetzt werden, gleichzeitig aber auch zum Fixieren des Kabels 16 in entsprechenden Abständen, beispielsweise im Abstand von 5 m. Hierzu ist er nach Figur 2 mit mehreren Kabelhaltern 24, 25 bestückt, wobei es sich hierbei, wie noch weiter hinten erläutert ist, um eine Art Klebestreifen handelt. Der Packer 20 wird über ein Zugseil 26 bzw. 28 in die eine oder andere Richtung gezogen, wozu Antriebsrollen 10, 12 vorgesehen sind. Mit den Zugseilen 26, 28 kombiniert sind Druckluftleitungen 27, 29, so dass gleichzeitig oder auch nur von einer Seite jeweils Druckluft dem Packer 20 zugeführt wird, um diesen so aufzublähen, dass die aufgelegten Kabelhalter 24, 25 sich an die Innenwand 23 des Abwasserrohres 3, das Kabel 16 gleichzeitig mitfixierend, angepresst werden können.

Der in Figur 2 gezeigte Packer 20 verfügt über mehrere in Längsrichtung angeordnete Kammern 30, 31, wobei hier jeweils schmale Klebestreifen 34 aufgelegt sind, um so das Kabel 16, wie im Bereich 19 gezeigt, im Abstand an der Innenwand 23 des Abwasserrohres 3 festzulegen. Mit Hilfe der breiten Klebestreifen 33, der in Figur 2 links zu erkennen ist, erfolgt eine Stilllegung bzw. Sanierung von Schadstellen 35. Es kann also mit einer einzigen Baustelle sowohl der Schaden behoben werden wie das Kabel fixiert werden.

Die kombinierte Druckluftleitung und Zugseil 26 bis 29 sind über besondere Zugseilhalter 36, 37 mit dem eigentlichen Packer 20 verbunden, wobei die in Figur 2 gezeigten schmalen Klebestreifen 34 nicht die mögliche oder maximale Anzahl darstellen, sondern es können auch mehr oder weniger solcher schmalen Bereiche mit entsprechenden Kammern 30, 31 sein, die zum Einsatz kommen. Hier ist im übrigen verdeutlicht, dass mit einem und demselben Packer sowohl die schmalen Klebestreifen 34 wie auch die breiten Klebestreifen 33 zum Einsatz kommen können, nur dass dann nicht eine der Kammern sondern alle Kammern 31, 32 mit Druckluft versorgt werden, um sich aufzublähen und gegen die Innenwand 23 des Abwasserrohres 3 anzudrücken.

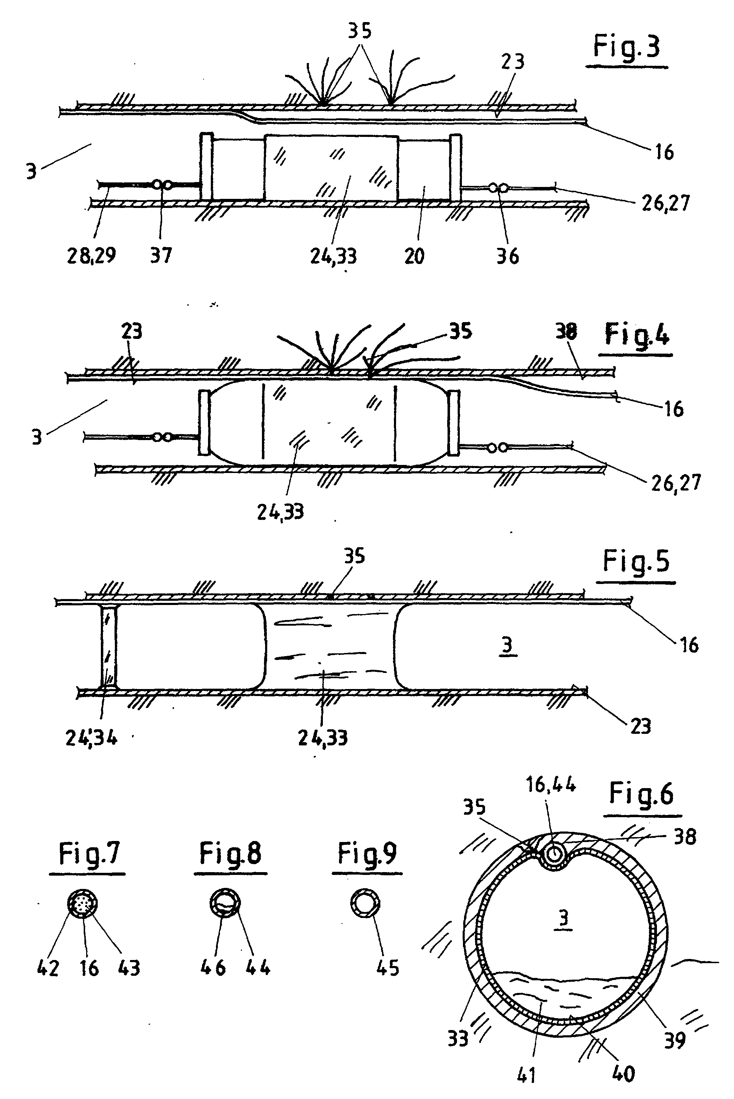

Figur 3 zeigt den Einsatz eines breiten Klebestreifens 33 mit dem Packer 20, wobei hier die Schadstelle 35 behoben werden soll. Zunächst einmal wird der Packer 20 in die entsprechende Position mit Hilfe der Zugseile 26, 28 gezogen, um dann gemäß Figur 4 den Packer 20 so aufzublähen, dass der Klebestreifen 33, der ja gleichzeitig Kabelhalter 24 ist, gegen die Innenwand 23 des Abwasserrohres 3 anzupressen. Wie Figur 4 verdeutlicht, wird dabei die Schadstelle 35 abgedeckt und abgeklebt, wobei gleichzeitig das Kabel 16 wie gewünscht im Scheitelpunkt 38 fixiert wird.

Der Packer 20 wird dann druckentlastet, so dass er wieder die Form gemäß Figur 3 erhält. Er kann dann aus dem Abwasserrohr 3 herausgezogen werden, wobei dann nach Figur 5 die stillgelegte Schadstelle 35 zurückbleibt, wo mit Hilfe des Kabelhalters 24 gleichzeitig auch das Kabel 16 festgelegt wird. Im Abstand zu diesem Kabelhalter 24 ist ein weiterer Kabelhalter 24' wiedergegeben, der hier von einem schmalen Klebestreifen 34 gebildet ist, über den ebenfalls eine Festlegung des Kabels 16 erfolgt. Hier ist der Abstand relativ klein gewählt. In Wirklichkeit wird er in der Regel wesentlich größer sein.

Figur 6 zeigt einen Schnitt durch den "geheilten" Bereich, wobei deutlich wird, dass das Kabel 16 oder die Versorgungsleitung 44 hier wirksam genau im Scheitelpunkt 38 festgelegt ist. Bei der Rohrwandung 39 handelt es sich um ein Betonrohr, an dem noch die Schadstelle 35 erkennbar ist, allerdings durch den Klebestreifen 33 so trockengelegt, dass eine weitere Beeinträchtigung des Abwasserrohres 3 nicht eintritt. Im Bereiche des Rohrgrundes 40 läuft jetzt das Abwasser 41 problemlos ab, ohne dass es zu einer Beeinträchtigung durch den Klebestreifen 33 kommt, der hier besonders dick zur Verdeutlichung wiedergegeben ist. In Wirklichkeit ist er wesentlich dünnwandiger, der er ja auch mit eingelegtem Glasfasergewebe oder ähnlichem Armierungsmaterial ausgerüstet oder nur wenige Millimeter Dicke erreicht.

Die Figur 7 zeigt ein Kabel 16, das hier eine Vielzahl von Glasfasern 42, 43 aufnimmt. Figur 8 zeigt eine Versorgungsleitung 44, in der Klarwasser bzw. Frischwasser 46 geführt wird, während Figur 9 eine Versorgungsleitung 45 für Gas wiedergibt.

Auch die in Figur 8 und Figur 9 gezeigten Versorgungsleitungen 44, 45 können wie die Kabel 16 Figur 1 bis 5 mit Hilfe des erfindungsgemäßen Verfahrens und dem Packer 20 wirkungsvoll verlegt werden. Der besondere "Witz" ist der, dass mit diesem Packer 20 und der gesamten Kabelfixiervorrichtung 8 ein Doppeleffekt erreicht wird, weil einmal damit das Kabel 16 bzw. die Versorgungsleitung 44, 45 am Scheitelpunkt 38 des Abwasserrohres 3 festzulegen sind, gleichzeitig aber auch die Abdichtungs- und Sanierungsarbeiten so durchzuführen sind, dass eventuelle Schadstellen 35 sicher behoben werden, und zwar zu einem wesentlich günstigeren Preis als wenn diese Arbeiten getrennt vorgenommen werden müssten. Dabei kann ein mit Hilfe der Kabelverlegeeinrichtung 1 bzw. der Kabelfixiervorrichtung 8 das entsprechende Kabel 16 durch die im Einsatz befindlichen Abwasserrohre 3 bis in den Bereich des Hauses hindurch verlegt werden, was enorme Vorteile letztlich bringt.

Alle genannten Merkmale, auch die den Zeichnungen allein zu entnehmenden, werden allein und in Kombination als erfindungswesentlich angesehen.

## Patentansprüche

1. Verfahren zur Verlegung von Kabeln (16) im Erdreich unter Ausnutzung von Abwasserrohren (3) und Kanälen, wobei das Kabel (16) im Rohr im vorgegebenen Abstand über ein Anpressmittel befestigt und dann an den Versorger und den Abnehmer angeschlossen wird,
**dadurch gekennzeichnet,**
**dass** das Kabel (16) in den Abschnitt zwischen zwei Schächten (4,5) oder Begehungspunkten eingeführt und auf Spannung gebracht und gehalten wird, dass ein dem Rohrquerschnitt angepasst ausgebildeter Packer (20) mit Hilfe eines Zugseils (26,28) in das Rohr (3) eingeschoben und im vorgegebenen Abstand aufgebläht wird, über den ein Kabelhalter (24,25) in Form eines mit Zweikomponentenkleber getrankten Klebestreifens (33,34) an der Kanalinnenwand (23) festgesetzt wird, der rund um den Packer (20) gelegt und über diesen auch rundum an die Innenwand (23) angepresst und unter Einfassung des Kabels (16) an der Innenwand des Rohres angeklebt wird und dass mit Hilfe des Packers gleichzeitig bei Bedarf eine Rohrsanierung durch Mitverkleben undichter Stellen durchgeführt wird.

2. Verfahren zur Verlegung von Versorgungsleitungen (44,45) im Erdreich (2), die abschnittsweise zusammengefügt im Erdreich verlegt über ein Anpressmittel im Kanal festgelegt und dann an den Versorger und den Abnehmer angeschlossen werden,
**dadurch gekennzeichnet,**
**dass** die Versorgungsleitung in Form eines Metall- oder Kunststoffrohres vorab zusammengefügt in den Abschnitt zwischen zwei Schächten oder Begehungspunkten eines im Erdreich (2) verlegten Abwasserkanals oder einer Abwasserrohrleitung (3) eingeführt und über Vorspannung im Bereich des oberen Scheitelpunktes (38) des Rohrquerschnittes gehalten wird, dass ein dem Rohrquerschnitt angepasst ausgebildeter Packer (20) mit Hilfe eines Zugseils (26,28) in die Rohrleitung (Kanal) eingeschoben und im vorgegebenen Abstand aufgebläht wird, über den ein Leitungshalter in Form eines mit Zweikomponentenkleber getränkten Klebestreifens (33,34) an der Rohrleitungsinnenwand (23) festgesetzt wird, der rund um den Packer gelegt und über diesen auch rundum an die Innenwand (23) angepresst und unter Einfassung des Kabels an der Innenwand des Rohres angeklebt wird, und dass bei Bedarf gleichzeitig mit Hilfe des Packers (20) eine Rohrleitungssanierung durch Mitverkleben undichter Stellen durchgeführt wird.

3. Verfahren nach Anspruch 1 oder Anspruch 2,
**dadurch gekennzeichnet,**
**dass** das Kabel (16) oder die Versorgungsleitung jeweils im oberen Scheitelpunkt (38) des Rohres oder Kanals angeheftet wird.

4. Verfahren nach einem der vorhergehenden Ansprüche,
**dadurch gekennzeichnet,**
**dass** der Packer (20) mit mehreren im Abstand angeordneten Klebestreifen (33,34) versehen wird und dass dann durch segmentweises Aufblähen einer Kammer (30,31) und nach Verschieben des Packers auch der anderen an der Innenwand (23) festgeklebt werden.

5. Verfahren nach einem der vorhergehenden Ansprüche,
**dadurch gekennzeichnet,**
**dass** das Kabel (16) vom Abwasserkanal ausgehend über eine Entsorgungsrohre bis in ein Haus und letztlich eine Wohnung geführt und dort beispielsweise mit einer Telefonzentrale, einem Computer oder Fernseher o. Ä. verbunden wird.

6. Verfahren nach einem der vorhergehenden Ansprüche,
**dadurch gekennzeichnet,**
**dass** das Kabel oder die Versorgungsleitung (44,45) im immer gleichen, metrischen, vorzugsweise 5000-mm-Abstand im Scheitelpunkt (38) festgelegt wird.

7. Einrichtung zur Verlegung von Kabeln (16) und/oder von Versorgungsleitungen (44, 45) im Erdreich (2) unter Ausnutzung vorhandener Abwasserrohre (3) und -kanäle mit einer von den Schächten (4, 5) oder Berührungspunkten aus einzuführenden und im Abwasserrohr (3) verschiebbaren und fernbedienbaren Kabelfixiereinrichtung (8) und damit zur Durchführung des Verfahrens in Anspruch 1 oder Anspruch 2 und den nachfolgenden Ansprüchen 3 bis 6,
**dadurch gekennzeichnet,**
**dass** die Kabelfixiervorrichtung (8) ein dem Abwasserrohr (3) angepasst ausgebildeter Packer (20) ist, der mit einem als mit Zweikomponentenkleber getränkter Klebestreifen (33, 34), dessen Länge dem Innenumfang des Abwasserrohres (3) entsprechend bemessen ist ausgebildeter Kabelhalter (24, 25) zu bestücken und im Abwasserrohr (3) hin und her zu verschieben und aufblähbar und gegen die Innenwand (23) des Abwasserrohres (3) zu verspannen ist und dass getrennt davon für das Kabel (16) oder die Versorgungsleitung (44, 45) eine Einführ- und Spannvorrichtung (18) vorgesehen ist.

8. Einrichtung nach Anspruch 7,
**dadurch gekennzeichnet,**
**dass** der Packer (20) beidseitig mit einem Zugseil (26, 28) verbunden ist, von denen eines, vorzugsweise beide mit einer Druckluftleitung (27, 29) kombiniert sind.

9. Einrichtung nach Anspruch 7 und/oder Anspruch 8,
**dadurch gekennzeichnet,**
**dass** der Packer (20) mehrere, nacheinander oder gleichzeitig mit der Druckluftleitung (27, 29) verbindbare Kammern (30, 31) aufweist.

10. Einrichtung nach Anspruch 9,
**dadurch gekennzeichnet,**
**dass** jede der Kammern (30, 31) mit einem Kabelhalter (24, 25) auszurüstbar ausgebildet ist.

11. Einrichtung nach einem der vorhergehenden Ansprüche,
**dadurch gekennzeichnet,**
**dass** der Packer (20) sich am bereits verlegten Kabel (16) führend bzw. am Scheitelpunkt (38) des Abwasserrohres (3) orientierend ausgebildet ist.

12. Einrichtung nach einem der vorhergehenden Ansprüche,
**dadurch gekennzeichnet,**
**dass** der Kabelhalter (24, 25) als Innenmanschette aus Stahl oder als Innenmanschette aus PVC oder als Elastomermanschette mit teilflächiger Verspannung und an der Innenwand (23) des Rohres (3) festlegbar und an sie anformbar ausgebildet ist.

## Claims

1. Method of laying cables (16) in the ground using sewage pipes (3) and conduits, the cable (16) being fastened in the pipe in the predetermined state via a pressing means and then being connected to the supplier and the consumer, **characterised in that** the cable (16) is introduced into the portion between two shafts (4, 5) or access points, energised and kept energised, **in that** a packer (20) adapted in design to the pipe cross-section is inserted into the pipe (3) with the aid of a cable pull (26, 28) and is inflated with the predetermined spacing, via which packer (20) a cable holder (24, 25) in the form of an adhesive strip (33, 34) impregnated with two-pack adhesive is fixed to the inner wall (23) of the conduit, the adhesive strip (33, 34) being laid around the packer (20) and also pressed all the way round via this packer (20) on to the inner wall (23) and being stuck to the inner wall of the pipe while surrounding the cable (16) and **in that** with the aid of the packer a pipe renovation is simultaneously carried out if necessary by sticking up leaks.

2. Method of laying supply lines (44, 45) in the ground (2), which are joined in portions, laid in the ground and fixed in the conduit via a pressing means and then connected to the supplier and the consumer, **characterised in that** the supply line in the form of a metal or plastic pipe is joined together in advance and guided into the portion between two shafts or access points of a sewage conduit or a sewage pipeline (3) laid in the ground (2) and is held by initial tension in the region of the upper crown (38) of the pipe cross-section, **in that** a packer (20) adapted in design to the pipe cross-section is inserted with the aid of a cable pull (26, 28) into the pipeline (conduit) and is inflated with the predetermined spacing, via which packer (20) a line holder in the form of an adhesive strip (33, 34) impregnated with two-pack adhesive is fixed to the inner wall (23) of the pipeline, the adhesive strip (33, 34) being laid around the packer and also pressed all the way round via this packer (20) on to the inner wall (23) and being stuck to the inner wall of the pipe while surrounding the cable and **in that** with the aid of the packer (20) a pipeline renovation is carried out if necessary by sticking up leaks.

3. Method according to claim 1 or 2, **characterised in that** the cable (16) or supply line is respectively attached in the upper crown (38) of the pipe or conduit.

4. Method according to any one of the preceding claims, **characterised in that** the packer (20) is provided with a plurality of spaced adhesive strips (33, 34) and **in that** by segment-wise inflation of a chamber (30, 31) and after displacement of the packer, of the other may also be stuck to the inner wall (23).

5. Method according to any one of the preceding claims, **characterised in that** the cable (16) starting from the sewage conduit is guided via a waste pipe to a house and finally a flat and is connected there, for example to a telephone system, a computer or television or the like.

6. Method according to any one of the preceding claims, **characterised in that** the cable or the supply line (44, 45) is always fixed at the same, metric, preferably 5,000 mm spacing in the crown (38).

7. Device for laying cables (16) and/or supply lines (44, 45) in the ground (2) using existing sewage pipes (3) and conduits with a remotely controlled cable fixing device (8) which is displaceable in the sewage pipe (3) and to be introduced from the shafts (4, 5) or contact points and therefore for carrying out the method in claim 1 or claim 2 and the following claims 3 to 6, **characterised in that** the cable fixing device (8) is a packer (20) adapted in design to the sewage pipe (3), wherein the packer (20) is to be equipped with an adhesive strip (33, 34) impregnated with a two-pack adhesive, the length of which corresponds in size to the internal circumference of the sewage pipe (3), is to be displaced back and forth in the sewage pipe (3), is inflatable and is to be fixed against the inner wall (23) of the sewage pipe (3) and **in that** an introduction and fixing device (18) is provided separately therefrom for the cable (16) or the supply line (44, 45).

8. Device according to claim 7, **characterised in that** the packer (20) is connected on either side to a cable pull (26, 28) of which one, preferably both are combined with a compressed air line (27, 29).

9. Device according to claim 7 and/or claim 8, **characterised in that** the packer (20) has a plurality of chambers (30, 31) which can be connected in succession or simultaneously to the compressed air line (27, 29).

10. Device according to claim 9, **characterised in that** each of the chambers (30, 31) is designed so it may be equipped with a cable holder (24, 25).

11. Device according to any one of the preceding claims, **characterised in that** the packer (20) is designed to be guided on the already laid cable (16) or oriented on the crown (38) of the sewage pipe (3).

12. Device according to any one of the preceding claims, **characterised in that** the cable holder (24, 25) is designed as an inner sleeve made of steel or as an inner sleeve made of PVC or as an elastomeric sleeve with partial biasing and is designed to be fixable to the inner wall (23) of the pipe (3) and can be moulded thereon.

## Revendications

1. Procédé pour poser des câbles (16) dans le sol en utilisant des tubes (3) et des canaux pour les eaux usées, le câble (16) étant fixé dans le tube à des intervalles prédéterminés par l'intermédiaire d'un moyen de serrage, et étant raccordé au dispositif d'alimentation et à l'utilisateur, **caractérisé en ce**
**que** le câble (16) est placé sous tension et retenu dans la section entre deux puits (4, 5) ou deux points d'inspection, qu'une garniture d'étanchéité (20) agencée de manière à être adaptée à la section transversale du tube est insérée dans le tube (3) à l'aide d'un câble de traction (26, 28) et est gonflée à la distance prédéterminée sur laquelle un dispositif de retenue de câble (24, 25) se présentant sous la forme d'une bande adhésive (33, 34) préimprégnée d'une colle à deux constituants, est fixé sur la paroi intérieure (23) du canal, qui est disposée tout autour de la garniture d'étanchéité (20) et est également serrée par l'intermédiaire de cette dernière, sur tout le pourtour de la paroi intérieure (23) et est collée, tout en enserrant le câble (16), sur la paroi intérieure du tube, et qu'un assainissement du tube est réalisé simultanément le cas échéant, à l'aide de la garniture d'étanchéité, grâce au collage conjoint d'emplacements non étanches.

2. Procédé pour poser dans le sol (2) des canalisations d'alimentation (14, 45), qui sont fixées en étant réunies par sections dans le sol, à l'aide d'un moyen de serrage dans le canal, puis sont raccordées à l'appareil d'alimentation et à l'utilisateur, **caractérisé en ce**
**que** la canalisation d'alimentation sous la forme d'un tube métallique ou en matière plastique est introduite, en étant préalablement assemblée, dans la section entre deux puits ou points d'inspection d'un canal d'eaux usées disposé sous terre (2) ou d'une canalisation tubulaire pour les eaux usées (13) et est retenue moyennant une précontrainte dans la zone du sommet supérieur (38) de la section transversale tubulaire, qu'on introduit une garniture d'étanchéité (20) agencée de manière à être adaptée à la section transversale du tube, à l'aide d'un câble de traction (26, 28) dans la conduite tubulaire (canal) et qu'on le gonfle à des intervalles prédéterminés, à un intervalle prédéterminé sur lequel un dispositif de retenu du conducteur sous la forme d'une bande adhésive (33, 34) imprégnée d'un adhésif à deux constituants, est fixé sur la paroi intérieure (23) de la conduite tubulaire, bande qui est placée directement autour de la garniture d'étanchéité et, au moyen de cette dernière, est également serrée sur la toute la périphérie de la paroi intérieure (23), et est collé, tout en enserrant le câble sur la paroi intérieure du tube, et que le cas échéant, un assainissement de la conduite tubulaire est exécuté simultanément à l'aide de la garniture d'étanchéité (20), grâce au collage conjoint de zones non étanches.

3. Procédé selon la revendication 1 ou la revendication 2, **caractérisé en ce qu'**on fixe par adhérence le câble (16) ou la canalisation d'alimentation respectivement au niveau du point sommital supérieur (38) du tube ou du canal.

4. Procédé selon l'une des revendications précédentes, **caractérisé en ce que** la garniture d'étanchéité (20) est pourvue de plusieurs bandes d'adhésif (33, 34) disposées à distance les unes des autres et qu'après le gonflement des segments d'une chambre (30, 31) formant des segments et après déplacement de la garniture d'étanchéité, on fixe également par collage l'autre élément sur la paroi intérieure (23).

5. Procédé selon l'une des revendications précédentes, **caractérisé en ce que** le câble (16) est guidé depuis le canal des eaux usées en passant par un tube d'évacuation jusque dans une maison et finalement dans une habitation et est relié par exemple à un central téléphonique, à un ordinateur ou à un téléviseur ou analogue.

6. Procédé selon l'une des revendications précédentes, **caractérisé en ce que** le câble ou la canalisation d'alimentation (44, 45) est fixée au point sommital (38) à une distance métrique toujours identique, de préférence égale à 5000 mm, au point sommital (38).

7. Dispositif pour poser des câbles (16) et/ou des canalisations d'alimentation (44, 45) dans le sol (2) moyennant l'utilisation de tubes (3) et de canaux d'eaux usées, présents, avec un dispositif de fixation de câble (8), pouvant être introduit à partir des puits (4, 5) ou des points d'inspection et pouvant être déplacé dans le conduit (3) des eaux usées et étant télécommandable, et par conséquent pour la mise en oeuvre du procédé selon la revendication 1 ou la revendication 2 et les revendications suivantes 3 à 6, **caractérisé en ce**
**que** le dispositif de fixation de câble (8) est une garniture d'étanchéité (20) agencée de manière à être adaptée au tube des eaux usées (3) et qui doit être équipée d'une bande d'adhésif (33, 34), imprégnée par un adhésif à deux constituants et dont la longueur est dimensionnée d'une manière qui correspond à la périphérie intérieure du tube pour les eaux usées (3), et qui doit être équipée d'un dispositif de retenue de câble (24, 25) et peut être déplacée en va-et-vient et gonflable dans le tube d'évacuation d'eaux usées (3) et peut être serrée contre la paroi intérieure du tube (23) pour les eaux usées et que séparément de cela, un dispositif d'introduction et de serrage (10) est prévu pour le câble (16) ou pour la canalisation d'alimentation (44, 45).

8. Dispositif selon la revendication 7, **caractérisé en ce que** la garniture d'étanchéité (20) est reliée des deux côtés à des câbles de traction (26, 28), l'un des câbles de traction et de préférence les deux câbles de traction étant combinés à une canalisation d'air comprimé (27, 29).

9. Dispositif selon la revendication 7 et/ou la revendication 8, **caractérisé en ce que** la garniture d'étanchéité (20) comporte plusieurs chambres (30, 31) pouvant être reliées successivement ou simultanément à la canalisation d'air comprimé (27, 29).

10. Dispositif selon la revendication 9, **caractérisé en ce que** chacune des chambres (30, 31) est agencée de manière à pouvoir être équipée d'un dispositif de retenue de câble (24, 25).

11. Dispositif selon l'une des revendications précédentes, **caractérisé en ce que** la garniture d'étanchéité (20) est agencée de manière à être guidée le long du câble déjà posé (16) et à s'orienter sur le point sommital (38) du tube d'évacuation d'eaux usées (3).

12. Dispositif selon l'une des revendications précédentes, **caractérisé en ce que** le dispositif de retenue de câble (24, 25) est agencé de manière à pouvoir être fixé sous la forme d'un manchon intérieur en acier ou d'un manchon intérieur en PVC ou sous la forme d'un manchon élastomère avec un serrage sur une surface partielle, sur la paroi intérieure (23) du tube (3) et de manière à pouvoir être conformée sur cette paroi.
